(19) Europäisches Patentamt / European Patent Office / Office européen des brevets

(11) **EP 3 080 639 B1**

(12) **FASCICULE DE BREVET EUROPEEN**

(45) Date de publication et mention de la délivrance du brevet:
**12.09.2018 Bulletin 2018/37**

(21) Numéro de dépôt: **14820772.3**

(22) Date de dépôt: **10.12.2014**

(51) Int Cl.:
*G01S 5/04* (2006.01)          *G01S 5/12* (2006.01)
*H04K 3/00* (2006.01)          *H01Q 1/00* (2006.01)
*H01Q 13/20* (2006.01)

(86) Numéro de dépôt international:
**PCT/EP2014/077270**

(87) Numéro de publication internationale:
**WO 2015/086700 (18.06.2015 Gazette 2015/24)**

(54) **PROCEDE ET DISPOSITIF DE DETECTION ET LOCALISATION LINEIQUE CONFINEE**

LINEARE BESCHRÄNKTE DETEKTION SOWIE ORTUNGSVERFAHREN UND VORRICHTUNG

CONFINED LINEAR DETECTION AND LOCATION METHOD AND DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2013 FR 1302899**

(43) Date de publication de la demande:
**19.10.2016 Bulletin 2016/42**

(73) Titulaire: **Thales**
**92400 Courbevoie (FR)**

(72) Inventeurs:
• **DELAVEAU, François**
**F-92622 Gennevilliers Cedex (FR)**
• **THIZON, Christophe**
**F-92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
DE-A1-102007 037 723      DE-A1-102011 107 164
US-A1- 2008 042 864      US-A1- 2011 183 602
US-A1- 2013 162 500

• **VALERIO DE SANTIS ET AL: "Revealing system of GSM mobile phone operations aboard aircraft", ELECTROMAGNETIC COMPATIBILITY - EMC EUROPE, 2008 INTERNATIONAL SYMPOSIUM ON, IEEE, PISCATAWAY, NJ, USA, 8 septembre 2008 (2008-09-08), pages 1-6, XP031426285, ISBN: 978-1-4244-2737-6**

**Description**

L'objet de l'invention concerne un procédé et un dispositif de détection et localisation confinée, utilisant un aérien linéique et des moyens de détection et de localisation adaptés à détecter et localiser des systèmes radioélectriques dont le fonctionnement n'est pas autorisé dans une zone d'interdiction fermée ou semi-ouverte donnée.

Elle trouve son application dans des endroits confinés, en particulier en environnement « indoor », tels que les prisons, les centres d'examen, les établissements scolaires, les ambassades, les casernes et de manière plus générale, les sites sensibles.

Dans certains environnements tels que les prisons, les centres d'examen, précités, l'utilisation de dispositifs de radiocommunications, tels que les téléphones portables, est interdite. L'un des problèmes posés aujourd'hui est de détecter toutes les radiocommunications non autorisées dans une enceinte fermée en contrôlant le confinement pour éviter toute intrusion ou gêne dans les communications d'utilisateurs non concernés par l'interdiction.

L'état de l'art connu du demandeur décrit des systèmes de détection et des systèmes qui détectent les radiocommunications illicites et localisent les terminaux qui utilisent ces radiocommunications avec des antennes radio conventionnelles, et parfois émettant un signal de brouillage en réaction. En environnement indoor confiné et en espace semi ouvert, ces dispositifs présentent de nombreux inconvénients, et ce, en raison de la nature du diagramme de rayonnement des antennes conventionnelles de type ponctuel ou à extension géométrique réduite et de la nature des pertes de propagation en $-20.\log_{10}(R)$ de la puissance rayonnée depuis un terminal jusqu'à une telle antenne conventionnelle (R étant la distance du terminal au centre de phase de l'antenne). Les aériens conventionnels et les systèmes qui les utilisent sont mal appropriés en termes d'efficacité et de couverture car le régime de pertes de propagation en $-20.\log_{10}(R)$ rend difficile la garantie de couverture et le contrôle du confinement de la détection. La sensibilité du système doit être augmentée pour garantir la couverture de la zone, mais alors le confinement n'est pas suffisant, ni pour éviter un grand nombre de fausses alarmes, ni pour garantir l'absence d'indiscrétion vis-à-vis des opérateurs et des utilisateurs externes non concernés par l'interdiction d'émettre. Ainsi ces systèmes conventionnels sont non seulement délicats à installer et à maintenir, mais aussi souvent onéreux dès que des couvertures significatives doivent être obtenues.

Le document intitulé « Revealing System of GSM Mobile Phone Operations Aboard Aircarft » divulgue un procédé de détection de téléphones cellulaires potentiellement présents dans un avion.

La demande de brevet US 2008/042864 divulgue un procédé de localisation d'un émetteur en mesurant les différences de phase et d'amplitude entre les signaux reçus dans un câble en plusieurs endroits du câble.

La demande de brevet DE 10 2011 107164 divulgue l'utilisation d'un câble pour localiser une unité mobile.

Le document DE 10 2007 037723 divulgue un procédé pour localiser un téléphone portable en utilisant un câble linéaire.

L'un des problèmes non résolu par l'art antérieur est la mise en oeuvre d'une détection et d'une localisation complètes et fiables pour une couverture d'un espace fermé ou semi-ouvert (connu aussi sous l'expression d'espace « indoor »), couverture à effet confiné, et au confinement contrôlé.

Il existe donc à l'heure actuelle un besoin de disposer d'un procédé et d'un dispositif permettant de détecter et localiser des appareils de radiocommunications dont l'utilisation est interdite, le dispositif s'appliquant à l'intérieur d'un espace indoor en général, avec une efficacité fiable, une couverture contrôlée, l'effet confiné, et le confinement contrôlé. L'expression « terminal illicite ou interdit » désigne un terminal, un dispositif de radiocommunication, qui n'a pas l'autorisation de fonctionner dans un périmètre donné et de communiquer avec l'extérieur de ce périmètre.

On utilisera de manière indifférente l'expression «élément linéique» ou «aérien linéique » pour désigner un même élément de type linéique.

L'objet de l'invention repose notamment sur l'utilisation d'un ou de plusieurs aériens à géométrie linéique associés à des dispositifs de réception au moyen de connecteurs, commutateurs et coupleurs adaptés. L'emploi de ces dispositifs de réception et la géométrie linéique de l'aérien permettant à la fois :

- d'assurer une couverture fiable de la détection,
- d'assurer une estimation fiable de localisation des sources d'émission détectées,
- de contrôler le confinement de la détection et de la localisation,
- d'identifier la nature des émissions par un traitement approprié, et ce, en adressant simultanément un grand nombre d'intervalles de fréquence et un grand nombre de systèmes de radiocommunications dont les plans de fréquence sont inclus dans ces intervalles.

L'invention concerne un dispositif pour détecter et localiser de façon confinée un ou plusieurs dispositifs radioélectriques susceptibles d'être présents dans une zone d'interdiction fermée ou semi ouverte, caractérisé en ce qu'il comporte au moins les éléments suivants: au moins un aérien linéique comprenant plusieurs orifices Oi adaptés à permettre la captation des signaux émis par le ou les dispositifs radioélectriques interdits, puis leur transmission via l'aérien linéique vers un dispositif de réception relié à l'aérien linéique via un connecteur, le dispositif de réception étant adapté à traiter les signaux captés par l'aérien linéique afin de détecter la présence de dispositifs interdits dans ladite zone et adapté à rejeter les détections des dispositifs autorisés hors de ladite zone.

Le dispositif de réception comporte, par exemple, au moins deux $Seuil_{j,f}$ et $Seuil'_{j,f}$ de détection, la valeur du seuil $Seuil_{j,f}$ est adaptée pour que la valeur de la puissance reçue $P(r,l)_{j,f}$, au niveau du dispositif de détection soit telle que le rapport $P(r,l)_{j,f}/N_{j,f}$ soit supérieur au seuil de détection $Seuil_{j,f}$ pour les porteuses employées par les émetteurs des dispositifs illicites considérés aux points $M(r,l)$ à l'intérieur de la zone d'interdiction, avec

$$10.\log_{10}(P_{0,j,f})-C(r_0)-P'.(l-l_0)-10.\log_{10}(r/r_0)-10.\log_{10}(N_{j,f})\geq 10.\log_{10}(Seuil_{j,f})+\eta$$

où

. $r$, $l$, sont les coordonnées, radiale et linéique, d'un point M,
. $l_0$ désigne une distance linéique de référence,
. $r_0$ désigne une distance radiale de référence à l'élément linéique,
. P' désigne le taux des pertes linéiques le long de l'aérien rayonnant à partir de la distance $l_0$,
. $-C(r_0)$ désigne les pertes par couplage dans la bande $B_{j,f}$ à la distance radiale de référence,
. $N_{j,f}$ désigne le bruit de réception dans la bande $B_{j,f}$,
. $P_{0,j,f}$ désigne la puissance rayonnée au point $M(r,l)$ dans la bande $B_{j,f}$,
. $Seuil_{j,f}$ représente le seuil de sensibilité du dispositif de réception dans la bande $B_{j,f}$, réglé pour obtenir le confinement de la détection,
. $\eta$ représente une certaine marge de précaution pour prendre en compte des atténuations supplémentaires du signal lors de sa propagation du terminal interdit à l'aérien, et

la valeur de $Seuil'_{j,f}$ est telle que:

$$10.\log_{10}(P_{S,j,f}) - 20.\log_{10}(R) - 10.\log_{10}(N_{j,f}) \leq 10.\log_{10}(Seuil'_{j,f}) - \eta'$$

où

. R est la distance du point M (en dehors de la zone d'interdiction) au centre de phase de l'aérien linéique, distance Réelle/centre phase,
. $P_{S,j,f}$ désigne la puissance rayonnée au point M(R) par les terminaux licites hors de la zone d'interdiction, dans la bande $B_{j,f}$,
. $Seuil'_{j,f}$ représente un seuil de non détection du dispositif de réception dans la bande $B_{j,f}$, réglé selon le gain de l'élément linéique pour obtenir le confinement de la détection à la zone d'interdiction,
. $\eta'$ représente une certaine marge de précaution pour prendre en compte des excès de puissance à l'émission pouvant notamment provenir de fluctuations du trafic et les fluctuations du régime de propagation pour les points hors de la zone d'interdiction.

Le dispositif peut comporter un premier dispositif de réception disposé à une première extrémité de l'aérien linéique et un deuxième dispositif de réception disposé à une deuxième extrémité de l'aérien linéique, le premier et le deuxième dispositif de réception étant synchronisés au moyen d'un module adapté afin de recevoir un même signal à détecter aux deux extrémités de l'aérien linéique.

Le module adapté pour synchroniser le premier et le deuxième dispositif de réception, peut comporter, un module d'estimation de localisation:

- à partir des valeurs d'amplitudes $A_1$, $A_2$ mesurées sur les signaux reçus sur chaque dispositif de réception,
- et/ou à partir du rapport mesuré $(A_1/A_2)$ de ces amplitudes après propagation, et/ou
- à partir des temps de propagation $\tau_1$, $\tau_2$ mesurés sur les signaux reçus sur chaque dispositif de réception, et/ou
- à partir de la différence mesurée $(\tau_1-\tau_2)$ de ces temps de propagation, et/ou
- à partir des phases de propagation $\varphi_1$, $\varphi_2$ mesurées des signaux reçus sur chaque dispositif de réception, et/ou
- à partir de la différence mesurée $(\varphi_1-\varphi_2)$ de ces phases de propagation.

Un au moins des dispositifs de réception peut être un récepteur générique large bande.

Selon une variante, le dispositif de réception est composé d'un ensemble de récepteurs dédiés, présentant des modules d'amplification des filtrages et des seuillages spécifiquement adaptés, dont les signaux en entrée proviennent d'un commutateur relié à l'aérien linéique.

Le dispositif de réception peut comporter des modules de filtrage sélectifs en fréquence et adaptés à exciser le signal reçu.

Le dispositif comporte, par exemple, un moyen adapté à coupler les signaux en sortie de deux aériens linéiques différents et à injecter le signal résultant dans un seul dispositif de réception.

Le dispositif comporte, par exemple, un système de baffles adapté à optimiser localement le confinement du signal, tels que des grilles de passage de câbles électriques avec montage inversé, des grillages de mailles et de géométries diverses.

L'invention concerne aussi un procédé pour détecter et localiser de façon confinée un ou plusieurs dispositifs radioélectriques éventuellement présents dans une zone interdite fermée ou semi ouverte, caractérisé en ce qu'il comporte au moins les étapes suivantes:

- utiliser un aérien linéique comprenant plusieurs orifices Oi adaptés à permettre le passage des signaux émis par le ou les dispositifs radioélectriques via l'aérien linéique vers un dispositif de réception connecté à l'aérien linéique,
- traiter les signaux reçus afin de détecter la présence de dispositifs non autorisés dans ladite zone et à rejeter les détections des dispositifs autorisés hors de ladite zone, le traitement des signaux utilise par exemple un premier $Seuil_{j,f}$ vérifiant

$$10.\log_{10}(P_{0,j,f}) - C(r_0) - P'.(l-l_0) - 10.\log_{10}(r/r_0) - 10.\log_{10}(N_{j,f}) \geq 10.\log_{10}(Seuil_{j,f}) + \eta$$

où

. $r$, $l$, sont les coordonnées, radiale et linéique, d'un point M,
. $l_0$ désigne une distance linéique de référence,
. $r_0$ désigne une distance radiale de référence à l'élément linéique,
. P' désigne le taux des pertes linéiques le long de l'aérien rayonnant à partir de la distance $l_0$,
. $-C(r_0)$ désigne les pertes par couplage dans la bande $B_{j,f}$ à la distance radiale de référence,
. $N_{j,f}$ désigne le bruit de réception dans la bande $B_{j,f}$,
. $P_{0,j,f}$ désigne la puissance rayonnée au point M(r,l) dans la zone d'interdiction, dans la bande $B_{j,f}$,
. $Seuil_{j,f}$ représente le seuil de sensibilité du dispositif de réception dans la bande $B_{j,f}$, réglé pour obtenir le confinement de la détection,
. $\eta$ représente une certaine marge de précaution pour prendre en compte des atténuations supplémentaires du signal lors de sa propagation du terminal interdit à l'aérien, et

un deuxième seuil $Seuil'_{j,f}$ de réjection vérifiant :

$$10.\log_{10}(P_{S,j,f}) - 20.\log_{10}(R) - 10.\log_{10}(N_{j,f}) \leq 10.\log_{10}(Seuil'_{,j,f}) - \eta'$$

où

. R est la distance du point M (en dehors de la zone d'interdiction) au centre de phase de l'aérien linéique,
. $P_{S,j,f}$ désigne la puissance rayonnée au point M(r,l) par les terminaux licites hors de la zone d'interdiction, dans la bande $B_{j,f}$,
. $Seuil'_{j,f}$ représente un seuil de non détection du dispositif de réception dans la bande $B_{j,f}$, réglé selon le gain de l'élément linéique pour obtenir le confinement de la détection,
. $\eta'$ représente une certaine marge de précaution pour prendre en compte des excès de puissance rayonnée à l'émission pouvant notamment provenir de fluctuations du trafic et les fluctuations du régime de propagation pour les points hors de la zone d'interdiction.

Selon une variante du procédé, on détermine les niveaux de seuil de détection $Seuil_{j,f}$ et de réjection $Seuil'_{j,f}$ en prenant en compte un ou plusieurs des paramètres suivants :

- les mesures des niveaux des signaux de balise, de contrôle et de trafic provenant d'émetteurs présents dans les réseaux externes et susceptibles d'entrer en communication avec les dispositifs illicites,

- le taux P' de pertes linéiques dans l'aérien linéique,
- les pertes par couplages $C(r_0)$ de l'aérien linéique,

- des marges $\eta$ destinées à compenser les atténuations supplémentaires de nature diverses qui peuvent affecter le signal de brouillage J lors de sa propagation depuis l'aérien linéique jusqu'au dispositif à brouiller,
- des marges $\eta'$ destinées à compenser les excès de puissance rayonnées à l'émission pouvant notamment provenir de non-stationnarités du trafic et les fluctuations du régime de propagation pour les points hors de la zone d'interdiction.

D'autres caractéristiques et avantages du procédé et du dispositif selon l'invention apparaîtront mieux à la lecture de la description qui suit d'un exemple de réalisation donné à titre illustratif et nullement limitatif annexé des figures qui représentent :

- la figure 1, un exemple de dispositif selon l'invention comprenant un élément linéique équipé de moyens de réception adaptés à capter et recevoir des signaux radioélectriques émis par des dispositifs se trouvant dans une zone à surveiller,
- la figure 2, un détail d'un élément linéique,
- la figure 3a, un exemple d'agencement d'un élément linéique pourvu à chacune de ses extrémités d'un dispositif de réception et mis en oeuvre dans un espace avec une direction privilégiée,
- la figure 3b, un exemple possible d'agencement de plusieurs éléments linéiques pour la mise en oeuvre du procédé dans un espace fermé de forme rectangulaire ou carrée dont les éléments linéiques définissent le périmètre, dans lequel le signal à détecter, reçu sur deux dispositifs de réception présents aux extrémités d'une diagonale, est distribué dans chaque demi-périmètre, et
- la figure 4, un exemple possible d'agencement de deux dispositifs de réception sur un même aérien linéique.

Afin de mieux faire comprendre l'objet de l'invention, la description qui suit est donnée à titre illustratif et nullement limitatif pour la détection et la localisation (éventuellement la caractérisation) d'un ou de plusieurs téléphones mobiles présents dans une enceinte et dont l'utilisation est en théorie interdite dans cette enceinte. Les explications qui vont suivre peuvent être appliquées pour tous les dispositifs de radiocommunications dont le fonctionnement n'est pas autorisé dans un espace indoor donné.

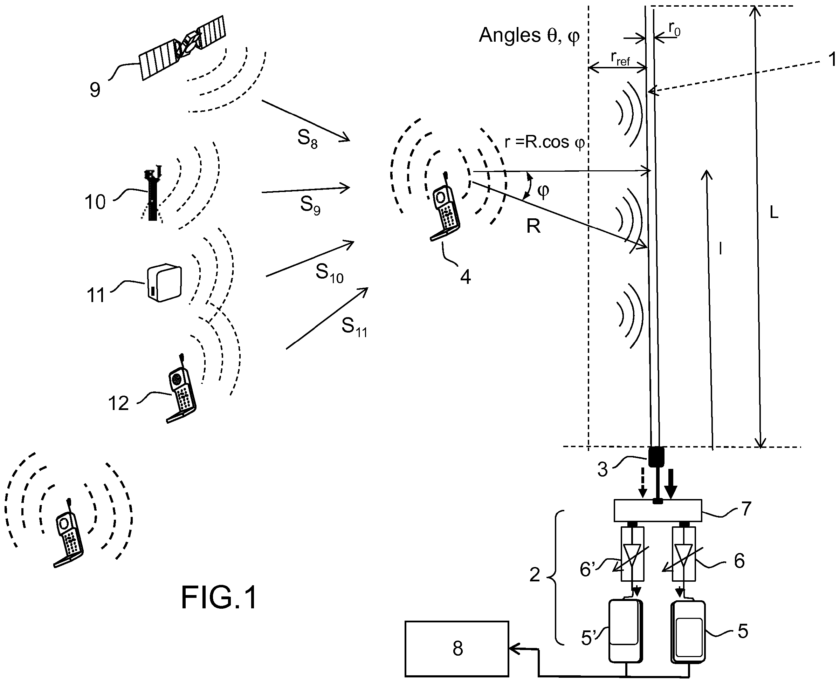

La figure 1 schématise un premier exemple de réalisation du dispositif selon l'invention comportant un aérien à géométrie linéique 1, associé via un connecteur 3 à un dispositif de réception 2 adapté à recevoir des signaux radioélectriques émis par des dispositifs dont le fonctionnement n'est pas autorisé dans une zone donnée, lui-même en liaison avec des moyens de traitement 8, tel qu'un processeur.

Le dispositif de réception 2 est, par exemple, composé de:

- un ou plusieurs récepteurs 5, 5' des signaux dans les plans de fréquences correspondant aux radiocommunications illicites, en liaison avec le dispositif 8 de traitement des signaux,
- un ou plusieurs modules 6, 6' de filtrage et d'amplification des signaux émis par les dispositifs d'émission illicites précités, modules de filtrages et amplification permettant de compenser d'éventuelles pertes de propagation dispersives en fréquence dans l'aérien linéique, de régler finement les sous-bandes, les porteuses, et les niveaux de sensibilité en réception,
- d'un éventuel commutateur 7 entre bandes de fréquences permettant de recevoir le signal effectivement capté par l'aérien linéique 1 via le connecteur 3 et de l'injecter vers les récepteurs 2 dédiés à chaque bande de fréquence.

Le dispositif de réception peut aussi être constitué d'un récepteur large bande muni des filtrages et des traitements adaptés dans chacune des sous-bandes correspondant aux émissions illicites. Dans ce cas, l'ensemble des composantes 5, 5', 6, 6' et 7 constituant le dispositif de réception 2 de la figure 1 est directement intégré dans une seule composante réception large bande 2.

De tels agencements permettent de réceptionner des signaux illicites multiples sur les bandes de fréquence et sur les porteuses adéquates dans des zones données où se trouvent potentiellement des terminaux interdits 4 que l'on cherche à détecter, et ce, avec des seuils de sensibilité adaptés.

Les moyens de traitement 8 sont notamment adaptés:

- à effectuer une détection sélective de signaux dans les sous-bandes et sur les porteuses concernant les potentielles communications illicites, par des procédés connus de l'homme de l'art tels que:

- le radiomètre sur les signaux en bande large,

- le radiomètre appliqué en parallèle sur les porteuses filtrées,
- le filtrage adapté des signaux reçus par les préambules, séquences d'apprentissage, codes pilotes, intervalles de garde, etc., appliqué en parallèle sur les porteuses filtrées, ces préambules séquences d'apprentissage codes pilotes intervalles de garde etc., étant connus de l'homme de l'art par consultation des normes décrivant les systèmes de radiocommunication interdits dans la zone,
- l'autocorrélation cyclique des signaux, appliquée en parallèle sur les porteuses filtrées,
- etc.,

- à effectuer des analyses spectrales et des caractérisations de la nature des communications détectées, à l'aide des traitements de détection précités (filtrage adapté, autocorrélation cyclique), voire le cas échéant, l'identification de l'abonné par décodage des messages de signalisation d'accès et de contrôle propres à la communication, préludant ainsi à une décision de blocage dans un système réactif,
- à effectuer des mesures d'amplitude A, de synchronisation $\tau$ de phase $\varphi$, sur les signaux reçus, soit en bande large, soit sur chaque porteuse filtrée, à l'aide des procédés connus de l'homme de l'art tels que:

- le radiomètre en bande large ou le radiomètre sur porteuse filtrée (estimation d'amplitude),
- la récupération de synchronisation symbole par estimation de rythme et diagramme de l'oeil (mesure de synchronisation $\tau$ et de phase $\varphi$ sur les modulations linéaires),
- le filtre adapté des signaux reçus par les préambules, les séquences d'apprentissage, codes pilotes, intervalles de garde, etc., appliqué en parallèle sur les porteuses filtrées (mesure d'amplitude A, de synchronisation $\tau$ et de phase $\varphi$ sur toutes les modulations numériques standardisées),

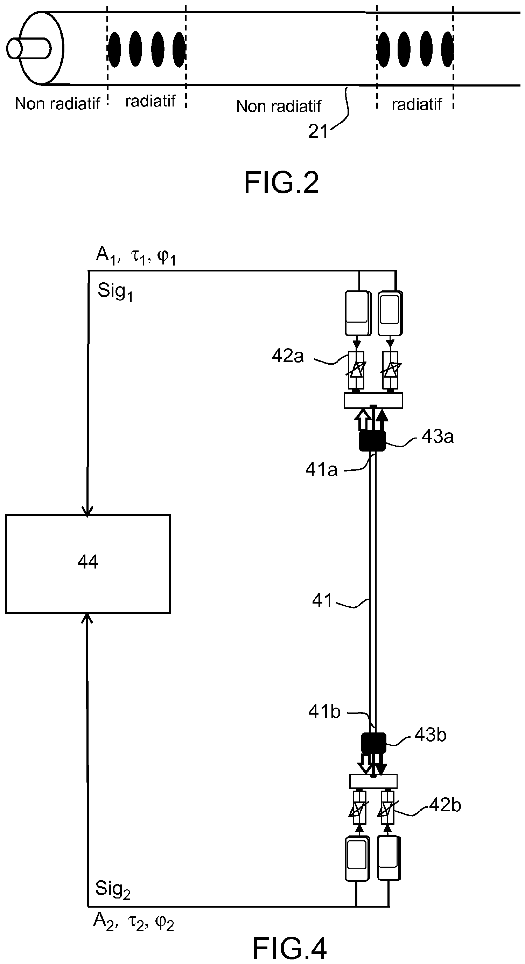

- à effectuer, lorsque deux dispositifs de réception sont connectés à un même aérien linéique comme sur la figure 4,

- des estimations de localisation en exploitant la valeur du rapport $A_2/A_1$ des amplitudes des signaux reçus sur chaque récepteur après propagation vers chaque extrémité de l'aérien linéique, et une calibration ou une modélisation préalable des pertes linéiques par propagation dans l'aérien linéique,
- des estimations de localisation en exploitant la différence de synchronisation $\tau_1$-$\tau_2$ des signaux reçus après propagation vers chaque extrémité de l'aérien linéique, et une calibration ou une modélisation préalable des temps de propagation dans l'aérien linéique,
- des estimations de localisation par différence de phase $\varphi_1 - \varphi_2$, des signaux reçus après propagation vers chaque extrémité de l'aérien linéique, et une calibration ou une modélisation préalable des déphasages dus à la propagation dans l'aérien linéique.

La figure 2 est un détail d'un câble linéique comprenant plusieurs orifices agencés de façon à permettre le passage des ondes émises par les terminaux illicites susceptibles de se trouver dans la zone à surveiller. L'aérien linéique 1 comporte plusieurs orifices Oi distribués le long de l'élément selon l'application souhaitée, les orifices sont séparés par des tronçons 21 qui ne permettent pas le passage des signaux émis par le téléphone portable non autorisé, les orifices Oi vont concentrer les signaux émis dans leur voisinage.

Plus généralement, un aérien à géométrie linéique tel que représenté sur la figure 1 présente, par exemple, des caractéristiques qui, combinées à des dispositifs de réception adaptés tels que décrits ci-dessus, permettent de capter sélectivement les signaux radioélectriques émis par les téléphones portables non autorisés, en contrôlant la couverture, la sensibilité et le confinement de cette captation.

Plus précisément, la puissance reçue P(l,r) par l'aérien, dans une bande B, émanant d'un point M(r,l) repéré par la distance linéique l et la distance radiale r, est donnée en décibel (dB) par le régime « cylindrique » de pertes de propagation exprimé par la formule suivante :

$$10.\log_{10}((P(l,r)) = 10.\log_{10}(P_0) - C(r_0) - P'.(l-l_0) - 10.\log_{10}(r/r_0) \qquad (1)$$

. l désignant la distance linéique,
. r désignant la distance radiale à l'élément linéique,
. $l_0$ désignant une distance linéique de référence (en pratique l'homme de l'art considère $l_0$ comme nul ou très faible, et fait correspondre par exemple $l_0$ à l'entrée du coupleur 7),
. $P_0$ désignant la puissance rayonnée au point M(r,l) dans la bande B,
. P' désignant le taux des pertes linéiques le long de l'aérien rayonnant (supposé, pour simplifier l'écriture mais sans limitation de généralité, constant dans la bande B, elle-même supposée suffisamment étroite); cette valeur est une donnée constructeur en général ou une grandeur appairée par la mesure dans chacune des bandes B, cette valeur est de quelques dB par 100 m de propagation dans l'aérien, ou plus si des atténuateurs sont ajoutés,

. $r_0$ désignant une distance radiale de référence (en général l'homme de l'art considère $r_0$=2m),

. $-C(r_0)$ désignant les pertes par couplage dans la bande B à la distance radiale de référence $r_0$, homogène sur la longueur de l'aérien. $-C(r_0)$ est une donnée constructeur en général, qui peut être appairée par mesure, valeur de l'ordre de -55 dB à -70 dB à distance radiale de référence $r_0$= 2m,

- P(l, r) est la puissance reçue dans la bande B du signal issu du point M(r,l). Dans le cas où l'on a une émission sur plusieurs sous-bandes simultanément, la puissance P considérée est globale et peut correspondre à plusieurs des sous-bandes.

Dans la formulation (1) ci-dessus:

- le taux P' des pertes linéiques par propagation dans l'aérien est faible, ce qui garantit un gain de l'aérien homogène sur les longueurs visées par l'invention, la distance linéique étant $l \in [l_0, L]$ ; $L \leq 100$ m,
- le régime cylindrique (exprimé en dB par $-10 \cdot \log_{10}(r/r_0)$ dans la formulation(1)) des pertes de propagation par rayonnement dépend linéairement de l'inverse de la distance radiale r à l'aérien linéique et non pas quadratiquement de l'inverse de la distance R absolue au centre de phase de l'aérien comme dans le cas des systèmes classiques à antenne ponctuelle ou de surface limitée décrits dans l'état de l'art.

Les dimensions de l'élément aérien linéique, son diamètre $\Phi$, sa longueur L et son orientation par rapport à la géométrie de la zone à couvrir, ainsi que la répartition des orifices Oi permettant la réception des signaux et le positionnement d'éventuels baffles pour faciliter le confinement, sont choisis notamment en fonction des dispositifs de radiocommunication que l'on souhaite détecter, et de la géométrie de la zone dans laquelle ils sont susceptibles de se trouver.

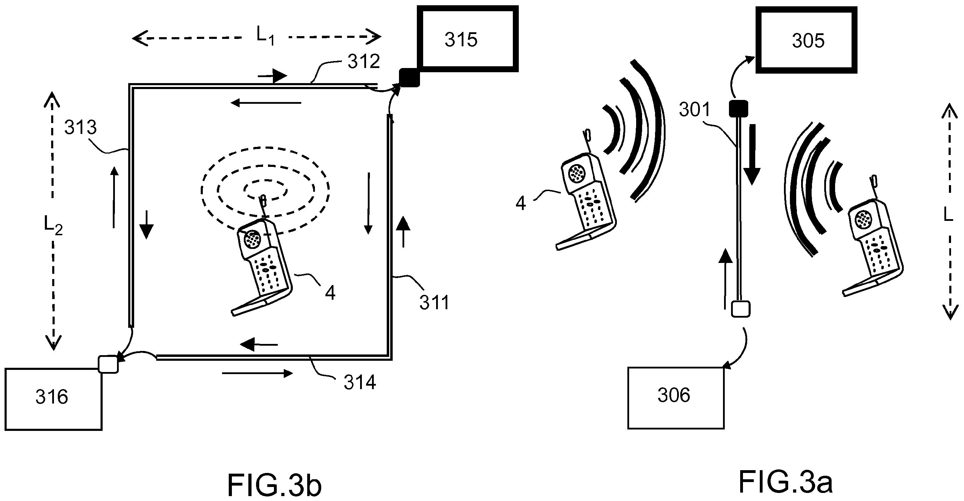

Lorsque la zone à couvrir présente des directions privilégiées (couloirs, coursives) comme sur la figure 3a, l'orientation des éléments linéiques est effectuée par exemple de manière tangentielle à ces directions privilégiées. Lorsque la zone à couvrir est une enceinte sans direction privilégiée, comme sur la figure 3b, les aériens sont disposés par exemple tangentiellement aux arêtes de cette enceinte.

Les niveaux de sensibilité (niveaux de seuils) des dispositifs récepteurs 2 sont réglés, par exemple, en tenant compte d'un ou plusieurs des éléments suivants :

- la proximité des émetteurs 9, 10, 11, 12, proches dans les réseaux externes et susceptibles d'entrer en communication avec les terminaux illicites que l'on veut détecter et localiser, et/ou
- la position en fréquence des voies balises et d'accès des émetteurs 9, 10, 11, 12, proches dans les réseaux externes et susceptibles d'entrer en communication avec les terminaux illicites que l'on veut détecter et localiser, et/ou
- le régime de pertes linéique explicité par la formule (1) ci-dessus, et/ou
- des marges $\eta$ et $\eta'$ destinées à compenser les atténuations et fluctuations supplémentaires de natures diverses qui peuvent affecter le signal à détecter lors de sa propagation depuis le lieu d'émission 4 jusqu'à l'aérien linéique 1 (murs, portes, corps humain, etc.) et lors de son émission.

On va chercher à obtenir un signal de détection de niveau supérieur à un seuil, $Seuil_j$, réglé pour les canaux d'accès ou de contrôle employés sur les porteuses f (porteuse de bande notée $B_{j,f}$) dans chaque bande $B_j$ j = 1...J, qui correspond aux émetteurs illicites dans une zone donnée. Il s'agit de faire en sorte que la puissance reçue $P(l,r)_{i,f}$, au niveau du dispositif de détection soit telle que :

- pour les porteuses employées par les émetteurs illicites considérés aux positions M(l,r) dans la zone interdite, le rapport $P(l,r)_{i,f}/N_{j,f}$ soit supérieur à un seuil de détection $Seuil_{j,f}$,
- pour les porteuses employées par les émetteurs considérés hors de la zone interdite à la distance R repérée par rapport au centre de phase de l'élément linéique, le rapport $P(R)_{i,f}/N_{j,f}$ soit inférieur à un seuil de réjection adapté,

$N_{j,f}$ étant le niveau du bruit de réception dans la bande $B_{j,f}$. $N_{j,f}$ et $B_{j,f}$ sont connus de l'homme de métier pour chaque réseau de radiocommunications et pour chaque type de porteuse d'accès ou de contrôle à détecter f par consultation des normes de ces réseaux.

Considérant le lieu du terminal illicite M(r,l), dans la zone interdite, la condition de détection s'écrit en décibels dans la bande $B_{i,f}$ de la porteuse f:

$$10.\log_{10}(P(l,r)_{j,f}) - 10.\log_{10}(N_{j,f}) \geq 10.\log_{10}(\text{Seuil}_{j,f}) \qquad (1')$$

Considérant toujours le lieu du terminal illicite M(r,l), la puissance moyenne rayonnée $P_{0,j,f}$ du signal émis au point M dans la bande $B_{j,f}$ de chaque porteuse f, le seuillage sur un signal reçu via l'aérien linéique 1 et le connecteur 3 doit donc vérifier pour la bande $B_{j,f}$ de chaque porteuse f :

$$10.\log_{10}(P_{0,j,f})-C(r_0)-P'.(l-l_0)-10.\log_{10}(r/r_0)-10.\log_{10}(N_{j,f})\geq 10.\log_{10}(\text{Seuil}_{j,f})+\eta \quad (2)$$

où $\eta$ représente une marge de précaution pour prendre en compte des atténuations supplémentaires du signal de brouillage lors de sa propagation de l'aérien au terminal interdit 4.

Cette condition exprimée dans la formule (2), devant être vérifiée pour une zone définie par un rayon $r_0 \leq r \leq r_{max}$, $l_0 \leq l \leq L_{max}$, une condition suffisante est, par exemple, de la vérifier pour $P_{0,j,f}=(P_{0,min})$, $r=r_{max}$, $l=L_{max}$, $\eta=\eta_{max}$, $\text{Max}_{j,f}(N_{j,f})=N_{max}$, $\text{Max}_{j,f}(\text{Seuil}_{j,f})$, $\text{Seuil}_{max}$

$$10.\log_{10}(P_{0,min})-C(r_0)-P'.(L_{max}-l_0)-10.\log_{10}(r_{max}/r_0)-10.\log_{10}(N_{max})$$

$$\geq 10.\log_{10}(\text{Seuil}_{max}) + \eta_{max} \qquad (3)$$

Pour des points M(R) éloignés de la zone d'interdiction, à la distance R (distance réelle/centre de phase) repérée par rapport au centre de phase de l'élément linéique, il s'agit de recevoir via l'aérien linéique une valeur de puissance de signal reçue $P(R)_{i,f}$, dans la bande $B_{i,f}$ de chaque porteuse suffisamment faible pour en rejeter la détection. On utilise une valeur de seuil $\text{Seuil'}_{j,f}$ et la condition de réjection en décibels suivante dans la bande $B_{i,f}$ de la porteuse f :

$$10.\log_{10}(P_{S,j,f}) - 20.\log_{10}(R) - 10.\log_{10}(N_{j,f}) \leq 10.\log_{10}(\text{Seuil'}_{j,f}) - \eta' \qquad (2')$$

où

- $P_{S,j,f}$ désigne la puissance moyenne rayonnée au point M(r,l) par les terminaux licites hors de la zone interdite, dans la bande $B_{j,f}$,
- $\text{Seuil'}_{j,f}$ représente un seuil de réjection des détections par le dispositif de réception dans la bande $B_{j,f}$, réglé selon le gain de l'élément linéique pour obtenir le confinement de la détection,
- $\eta'$ représente une certaine marge de précaution pour prendre en compte des excès de puissances rayonnées à l'émission pouvant notamment provenir de fluctuations du trafic et les fluctuations du régime de propagation pour les points éloignés de la zone d'interdiction,
- R est la distance du point M au centre de phase de l'aérien linéique, supposée suffisamment grande pour le régime des pertes de propagations sphériques en $20.\log_{10}(R)$ s'applique, pour cela, la marge $\eta'$ et les longueurs d'aérien L sont adaptées selon la longueur d'onde $\lambda$ des émissions détectées de manière à ce que R soit supérieur à la distance de Fraunhofer $2.L^2/\lambda$ pour les points éloignés de la zone d'interdiction.

La figure 3a, schématise une variante de réalisation de l'invention dans une enceinte à direction privilégiée de type couloir, dans laquelle on a installé un seul élément 301, au niveau d'un plafond et deux effecteurs 305, 306 aux extrémités opposées de l'élément, selon la description ci-dessus. Les orifices de l'élément linéique permettent la réception de signaux émis par le téléphone mobile 4 se situant dans la zone de couverture de l'élément linéique.

La figure 3b, schématise une variante de réalisation de l'invention dans une enceinte ne présentant pas de direction privilégiée, dans laquelle on a installé quatre éléments linéiques 311, 312, 313, 314, de longueur respectivement $L_2$, $L_1$, $L_2$, $L_1$, au niveau des murs non représentés d'une pièce de géométrie carrée à surveiller et deux effecteurs 315, 316 aux extrémités opposées de l'une des diagonales de la pièce, selon la description ci-dessus. L'effecteur 315 est relié selon un agencement décrit à la figure 1 aux deux éléments linéiques 311, 312, l'effecteur 316 est en liaison avec les éléments linéiques 313, 314. Les paramètres de seuillage et de marge seront notamment choisis en fonction de l'agencement en carré des éléments linéiques.

La figure 4, schématise une variante de réalisation dans laquelle deux dispositifs de réception sont connectés à un même aérien linéique 41 afin de réceptionner le signal à détecter à chacune de ses extrémités, le premier dispositif de réception 42a au niveau d'une première extrémité 41a de l'aérien linéique 41 via un premier connecteur 43a, et le deuxième dispositif de réception 42b au niveau de la deuxième extrémité 41b de l'aérien linéique 41 via un deuxième connecteur 43b. Dans ce cas, le premier et le deuxième dispositif de réception présentent des caractéristiques sensiblement identiques (mêmes bandes de fréquences, mêmes seuillages, mêmes marges). Ils sont synchronisés, ou leur synchronisation est appairée et entretenue dans un module 44 selon des techniques connues de l'homme du métier afin de permettre des mesures de temps de retard et de déphasage sur les signaux se propageant dans l'aérien linéique, ces mesures étant réalisées le cas échéant dans le module 44. Le module 44 comporte, par exemple, un module de synchronisation, un algorithme de traitement commun aux deux systèmes de réception, de détection, d'analyse des signaux, d'estimation de localisation et connu de l'homme du métier adapté à obtenir:

- des détections synchronisées,
- des estimations de localisation en exploitant le rapport $A_2/A_1$ des amplitudes des signaux reçus aux extrémités de l'aérien linéique, $A_1$ correspondant à l'amplitude du signal détecté par le premier détecteur et $A_2$ correspondant à l'amplitude détectée sur le deuxième détecteur, $A_2$ et $A_1$ étant mesurées d'après les détections synchronisées selon les procédés connus de l'homme de l'art, et en exploitant, par exemple, une calibration ou une modélisation préalable des pertes linéiques par propagation dans l'aérien linéique,
- des estimations de localisation par différence de temps de propagation $\tau_1$-$\tau_2$ des signaux reçus aux extrémités de l'aérien après propagation linéique, les retards $\tau_1$ et $\tau_2$ étant mesurés d'après les détections synchronisées, selon les procédés connus de l'homme de l'art, et une calibration ou une modélisation préalable des temps de propagation dans l'aérien linéique,
- des estimations de localisation par différence de phase de propagation φ1-φ2, des signaux reçus aux extrémités de l'aérien après propagation linéique, les phases $\varphi_1$ et $\varphi_2$ étant mesurées d'après les détections synchronisées, selon les procédés connus de l'homme de l'art précités, et une calibration ou une modélisation préalable des déphasages dus à la propagation dans l'aérien linéique.

Dans une sous-variante de la mise en oeuvre selon la figure 4, les signaux reçus à chaque extrémité de l'aérien linéique $Sig_1$ et $Sig_2$ sont directement acheminés au module de traitement commun 44, et le rapport d'amplitude $\Delta A = A_1/A_2$, la différence de temps de propagation $\Delta\tau = \tau_1$-$\tau_2$, ainsi que la différence de phase $\Delta\varphi = \varphi_1$-$\varphi_2$ sont directement estimés par inter-corrélation normalisée des signaux $Sig_1$ et $Sig_2$ selon des procédés connus de l'homme du métier.

Sans sortir du cadre de l'invention d'autres variantes de mise en oeuvre de l'invention sont possibles.

Par exemple, il est possible d'adjoindre au système, une ou plusieurs baffles pour optimiser localement le confinement de la détection. Pour la nature, la forme et la taille des baffles, on peut utiliser: des grilles de passage de câbles électriques (fréquences > 900 MHz) avec montage inversé, des grillages de mailles et géométries diverses. L'exemple d'un grillage plan rectangle d'ouverture $\geq (\lambda/2)^2$ ($\lambda$ : longueur d'onde de l'émission de brouillage) conduit à une directivité d'environ 120°, un rapport Avant/Arrière de l'ordre de 10 à 15 dB). Ceci facilite le confinement de la détection lors d'installation en « milieu semi-ouvert », par exemple pour des fenêtres prisons ou fenêtres de salles d'examen/conférence, ou lorsqu'il existe des problèmes de diffraction (conduites métalliques, autres).

Une autre variante consiste à adjoindre une métrologie en phase installation/maintenance ce qui permet de faciliter l'installation et le réglage du système. Pour cela on peut utiliser des terminaux de trace ou des sondeurs de canal de propagation bien connus de l'homme du métier.

Selon une autre variante de réalisation, on peut adjoindre un « sur-réseau » de communications filaires autorisé, ou encore un « sur-réseau » de communication exploitant des courants de ligne etc.

Selon une autre variante de réalisation, on peut adjoindre un «sur-réseau» de radiocommunication «à la carte» autorisé, au moyen des éléments suivants:

- choix de fréquences porteuses d'après un relevé préalable des planifications en fréquence des réseaux externes selon des procédés connus de l'homme de l'art,
- le cas échéant, excision en fréquence des porteuses autorisées et ce, au niveau du dispositif de réception (filtrage coupe bande) ou au niveau du traitement de détection et de son exploitation,
- installation d'un micro réseau local exploitant les porteuses autorisées et relais vers réseau externe.

Des exemples de composantes utilisables sur les porteuses qui seraient autorisées pour un tel sur-réseau sont des points d'accès sans fil DECT (Digital Enhanced Cordless Telephone), des pico/femto-cellules du système de troisième génération UMTS (Universal Mobile Télécommunications System) ou de la norme LTE (Long Term Evolution), des points d'accès points Wifi ou WiFi Direct, des terminaux UMTS «dispositif à dispositif » ou des terminaux LTE manet (norme Release 12 et 13) connus de l'homme du métier, etc.

Le procédé et le système selon l'invention offrent notamment les avantages suivants:

- la possibilité de détecter et de localiser sélectivement des postes de radiocommunications 0,3-3 GHz, le cas échéant avec un seul système à grande extension linéique,

- un confinement de la détection à une zone donnée sans impact sur l'environnement extérieur ni risques d'indiscrétion ou d'intrusion, en raison de la nature linéique de l'aérien et du régime de pertes cylindriques qui en découle selon la formulation (1),
- une souplesse d'installation, avec un déploiement de systèmes «à la carte», grâce à une adaptation de l'architecture du dispositif en fonction de la géométrie de la zone surveillée,
- une facilité de maintenance,
- de nombreuses possibilités d'extension en termes de fonctions ajoutées et en termes de services.

**Revendications**

1. Dispositif pour détecter et localiser de façon confinée un ou plusieurs dispositifs radioélectriques (4) qui seraient présents dans une zone d'interdiction fermée ou semi ouverte, **caractérisé en ce qu'**il comporte au moins les éléments suivants :

  • au moins un aérien linéique (1) comprenant plusieurs orifices Oi adaptés à permettre la captation des signaux émis par le ou les dispositifs radioélectriques interdits puis leur transmission desdits via l'aérien linéique vers un dispositif de réception (2) relié à l'aérien linéique (1) via un connecteur (3), le dispositif de réception étant adapté à traiter les signaux captés par l'aérien linéique (1) afin de détecter la présence de dispositifs interdits dans ladite zone et à rejeter les détections des dispositifs autorisés hors de ladite zone, et **en ce que** le dispositif de réception (2) comporte au moins deux $Seuil_{j,f}$ et $Seuil'_{j,f}$ de détection, la valeur du seuil $Seuil_{j,f}$ est adaptée pour que la valeur de la puissance reçue $P(r,l)_{j,f}$, au niveau du dispositif de détection soit telle que le rapport $P(r,l)_{j,f}/N_{j,f}$ soit supérieur au seuil de détection $Seuil_{j,f}$ pour les porteuses employées par les émetteurs des dispositifs illicites considérés aux points $M(r,l)$ à l'intérieur de la zone d'interdiction, avec :

$$10.\log_{10}(P_{0,j,f})-C(r_0)-P'.(l-l_0)-10.\log_{10}(r/r_0)-10.\log_{10}(N_{j,f}) \geq$$

$$10.\log_{10}(Seuil_{j,f})+\eta$$

où

  . $r$, $l$, sont les coordonnées, radiale et linéique, d'un point M,
  . $l_0$ désigne une distance linéique de référence,
  . $r_0$ désigne une distance radiale de référence à l'élément linéique,
  . $P'$ désigne le taux des pertes linéiques le long de l'aérien rayonnant à partir de la distance $l_0$,
  . $-C(r_0)$ désigne les pertes par couplage dans la bande $B_{j,f}$ à la distance radiale de référence,
  . $N_{j,f}$ désigne le bruit de réception dans la bande $B_{j,f}$,
  . $P_{0,j,f}$ désigne la puissance rayonnée au point $M(r,l)$ dans la bande $B_{j,f}$,
  . $Seuil_{j,f}$ représente le seuil de sensibilité du dispositif de réception dans la bande $B_{j,f}$, réglé pour obtenir le confinement de la détection,
  . $\eta$ représente une marge de précaution prenant en compte des atténuations supplémentaires du signal lors de sa propagation du terminal interdit (4) à l'aérien (1), et

  • la valeur du seuil $Seuil'_{j,f}$ est telle que:

$$10.\log_{10}(P_{S,j,f}) - 20.\log_{10}(R) - 10.\log_{10}(N_{j,f}) \leq 10.\log_{10}(Seuil'_{j,f}) - \eta'$$

où

  . $R$ est la distance du point M, en dehors de la zone d'interdiction, au centre de phase de l'aérien linéique,
  . $P_{S,j,f}$ désigne la puissance rayonnée au point $M(R)$ par les terminaux licites hors de la zone d'interdiction, dans la bande $B_{j,f}$,
  . $Seuil'_{j,f}$ représente un seuil de non détection du dispositif de réception dans la bande $B_{j,f}$, réglé selon le gain de l'élément linéique pour obtenir le confinement de la détection à la zone d'interdiction,

. η' représente une marge de précaution prenant en compte des excès de puissance à l'émission.

2. Dispositif selon la revendication 1 **caractérisé en ce qu'**il comporte un premier dispositif de réception (42a) disposé à une première extrémité (41a) de l'aérien linéique (41) et un deuxième dispositif de réception (42b) disposé à une deuxième extrémité (41b) de l'aérien linéique, le premier et le deuxième dispositif de réception étant synchronisés au moyen d'un module (44) afin de recevoir un même signal à détecter aux deux extrémités de l'aérien linéique (41).

3. Dispositif selon la revendication 2 **caractérisé en ce que** le module (44) comporte un module d'estimation de localisation:

   • à partir des valeurs d'amplitudes $A_1$, $A_2$ mesurées sur les signaux reçus sur chaque dispositif de réception, et/ou
   • à partir du rapport mesuré $(A_1/A_2)$ de ces amplitudes après propagation, et/ou
   • à partir des temps de propagation $\tau_1$, $\tau_2$ mesurés sur les signaux reçus sur chaque dispositif de réception, et/ou à partir de la différence mesurée $(\tau_1-\tau_2)$ de ces temps de propagation, et/ou
   • à partir des phases de propagation $\varphi_1$, $\varphi_2$ mesurées des signaux reçus sur chaque dispositif de réception, et/ou à partir de la différence mesurée $(\varphi_1-\varphi_2)$ de ces phases de propagation.

4. Dispositif selon l'une des revendications précédentes **caractérisé en ce que** l'un au moins des dispositifs de réception (2) est un récepteur générique large bande.

5. Dispositif selon l'une des revendications précédentes **caractérisé en ce que** le dispositif de réception (2) est composé d'un ensemble de récepteurs dédiés, présentant des modules d'amplification des filtrages et des seuillages spécifiquement adaptés, dont les signaux en entrée proviennent d'un commutateur (7) reliés à l'aérien linéique (1).

6. Dispositif selon l'une des revendications précédentes **caractérisé en ce que** le dispositif de réception (2) comporte des modules de filtrage sélectifs en fréquence adaptés à exciser le signal reçu.

7. Dispositif selon l'une des revendications précédentes **caractérisé en ce qu'**il comporte un moyen adapté à coupler les signaux en sortie de deux aériens linéiques différents et à injecter le signal résultant dans un seul dispositif de réception.

8. Dispositif selon l'une des revendications précédentes **caractérisé en ce qu'**il comporte un système de baffles adapté à optimiser localement le confinement du signal, tels que des grilles de passage de câbles électriques avec montage inversé, des grillages de mailles et de géométries diverses.

9. Procédé pour détecter et localiser de façon confinée un ou plusieurs dispositifs radioélectriques (4) présents dans une zone interdite fermée ou semi ouverte, **caractérisé en ce qu'**il comporte au moins les étapes suivantes:

   • utiliser un aérien linéique (1) comprenant plusieurs orifices Oi adaptés à permettre le passage des signaux émis par le ou les dispositifs radioélectriques via l'aérien linéique vers un dispositif de réception (2) connecté à l'aérien linéique (1),
   • traiter les signaux reçus afin de détecter la présence de dispositifs non autorisés dans ladite zone et à rejeter les détections des dispositifs autorisés hors de ladite zone, le traitement des signaux utilise un premier seuil $Seuil_{j,f}$ tel que :

$$10.\log_{10}(P_{0,j,f})-C(r_0)-P'.(l-l_0)-10.\log_{10}(r/r_0)-10.\log_{10}(N_{j,f}) \geq 10.\log_{10}(Seuil_{j,f})+\eta$$

où

   . r, l, sont les coordonnées, radiales et linéique, d'un point M,
   . $l_0$ désigne une distance linéique de référence,
   . $r_0$ désigne une distance radiale de référence à l'élément linéique,
   . P' désigne le taux des pertes linéiques le long de l'aérien rayonnant à partir de la distance $l_0$,
   . $-C(r_0)$ désigne les pertes par couplage dans la bande $B_{j,f}$ à la distance radiale de référence,
   . $N_{j,f}$ le bruit de réception dans la bande $B_{j,f}$,
   . $P_{0,j,f}$ désigne la puissance rayonnée au point M(r,l) dans la zone d'interdiction, dans la bande $B_{j,f}$,

. $Seuil_{j,f}$ représente le seuil de sensibilité du dispositif de réception dans la bande $B_{j,f}$, réglé pour obtenir le confinement de la détection,

. $\eta$ représente une certaine marge de précaution pour prendre en compte des atténuations supplémentaires du signal lors de sa propagation du terminal interdit 4 à l'aérien (1), et

un deuxième seuil $Seuil'_{j,f}$ de réjection tel que

$$10.\log_{10}(P_{S,j,f}) - 20.\log_{10}(R) - 10.\log_{10}(N_{j,f}) \leq 10.\log_{10}(Seuil'_{j,f}) - \eta'$$

où

. R est la distance du point M (en dehors de la zone d'interdiction) au centre de phase de l'aérien linéique,

. $P_{S,j,f}$ désigne la puissance rayonnée au point M(r,l) par les terminaux licites hors de la zone d'interdiction, dans la bande $B_{j,f}$

. $Seuil'_{j,f}$ représente un seuil de non détection du dispositif de réception dans la bande $B_{j,f}$, réglé selon le gain de l'élément linéique pour obtenir le confinement de la détection,

. $\eta'$ représente une marge de précaution prenant en compte des excès de puissance rayonnée à l'émission.

10. Procédé selon la revendication 9 **caractérisé en ce que** l'on détermine les niveaux de seuil de détection $Seuil_{j,f}$ et de réjection $Seuil'_{j,f}$ en prenant en compte un ou plusieurs des paramètres suivants :

- les mesures des niveaux des signaux de balise, de contrôle et de trafic provenant d'émetteurs (9, 10, 11, 12) présents dans les réseaux externes et susceptibles d'entrer en communication avec les dispositifs illicites,

- le taux P' de pertes linéiques dans l'aérien linéique,
- les pertes par couplages $C(r_0)$ de l'aérien linéique,

- des marges $\eta$ destinées à compenser les atténuations supplémentaires de nature diverses qui peuvent affecter le signal de brouillage J lors de sa propagation depuis l'aérien linéique (1) jusqu'au dispositif (4) à brouiller,
- des marges $\eta'$ destinées à compenser les excès de puissance rayonnées à l'émission.

**Patentansprüche**

1. Vorrichtung zum eingegrenzten Erfassen und Lokalisieren von einer oder mehreren Funkvorrichtungen (4), die in einer geschlossenen oder halboffenen Verbotszone vorhanden sind, **dadurch gekennzeichnet, dass** sie mindestens die folgenden Elemente umfasst:

• mindestens eine lineare Antenne (1), umfassend mehrere Öffnungen Oi, die angepasst sind, um die Erfassung von Signalen zu ermöglichen, die von dem oder den verbotenen Funkvorrichtungen ausgesendet werden, dann deren Übertragung über die lineare Antenne zu einer Empfangsvorrichtung (2), die mit der linearen Antenne (1) über einen Verbinder (3) verbunden ist, wobei die Empfangsvorrichtung angepasst ist, um die von der linearen Antenne (1) erfassten Signale zu behandeln, um die Anwesenheit verbotener Vorrichtungen in der Zone zu erfassen und um Erfassungen von autorisierten Vorrichtungen außerhalb der Zone abzulehnen, und dass die Empfangsvorrichtung (2) mindestens zwei DetektionSchwellenwert $Seuil_{j,f}$ und $Seuil'_{j,f}$ zur Erfassung umfasst, wobei der Wert des Schwellenwerts $Seuil_{j,f}$ angepasst ist, dass der Wert der empfangenen Leistung $P(r,l)_{j,f}$ auf Ebene der Erfassungsvorrichtung derart ist, dass das Verhältnis $P(r,l)_{j,f}/N_{j,f}$ für die Träger, die von den Herausgebern der jeweiligen unerlaubten Vorrichtungen an Punkten M(r,l) im Innern der Verbotszone eingesetzt sind, größer als der Erfassungsschwellenwert $Seuil_{j,f}$ ist, mit:

$$10.\log_{10}(P_{0,j,f})-C(r_0)-P'.(l-l_0)-10.\log_{10}(r/r_0)-10.\log_{10}(N_{j,f}) \geq 10.\log_{10}(Seuil_{j,f})+\eta,$$

wobei

. r, l, die radialen und linearen Koordinaten eines Punkts M sind,

. $l_0$ einen linearen Referenzabstand bezeichnet,

. $r_0$ einen radialen Referenzabstand zum linearen Element bezeichnet,

. P' die Rate linearer Verluste entlang der Antenne, die ab dem Abstand $l_0$ abgestrahlt werden, bezeichnet,

. -C($r_0$) die Verluste durch Kopplung in dem Band $B_{j,f}$ in dem radialen Referenzabstand bezeichnet,

. $N_{j,f}$ das Empfangsrauschen in dem Band $B_{j,f}$ bezeichnet,

. $P_{0,j,f}$ die abgestrahlte Leistung am Punkt M(r,l) in dem Band $B_{j,f}$ bezeichnet,

. Seuil$_{j,f}$ den Empfindlichkeitsschwellenwert der Empfangsvorrichtung in dem Band $B_{j,f}$ darstellt, der reguliert ist, um die Eingrenzung der Erfassung zu erlangen,

. η eine Vorsichtsspanne darstellt, die die zusätzlichen Abschwächungen des Signals bei seiner Ausbreitung von dem verbotenen Gerät (4) zu der Antenne (1) berücksichtigt, und

• der Wert des Schwellenwerts Seuil'$_{j,f}$ ist derart, dass:

$$10.\log_{10}(P_{s,j,f}) - 20.\log_{10}(R) - 10.\log_{10}(N_{j,f}) \leq 10.\log_{10}(\text{Seuil'}_{j,f}) - \eta',$$

wobei

. R ist der Abstand von dem Punkt M außerhalb der Verbotszone zur Phasenmitte der linearen Antenne,

. $P_{s,j,f}$ die abgestrahlte Leistung am Punkt M(R) durch die zulässigen Geräte außerhalb der Verbotszone in dem Band $B_{j,f}$ bezeichnet,

. Seuil'$_{j,f}$ einen Schwellenwert einer Nichterfassung der Empfangsvorrichtung in dem Band $B_{j,f}$ reguliert gemäß der Verstärkung des linearen Elements darstellt, um die Eingrenzung der Erfassung auf die Verbotszone zu erlangen,

. η' eine Vorsichtsspanne darstellt, die Leistungsüberschüsse bei der Aussendung berücksichtigt.

2. Vorrichtung nach Anspruch 1 **dadurch gekennzeichnet, dass** sie eine erste Empfangsvorrichtung (42a) umfasst, die an einem ersten Ende (41a) der linearen Antenne (41) angeordnet ist, und eine zweite Empfangsvorrichtung (42b), die an einem zweiten Ende (41b) der linearen Antenne angeordnet ist, wobei die erste und die zweite Empfangsvorrichtung mittels eines Moduls (44) synchronisiert sind, um an den beiden Enden der linearen Antenne (41) ein gleiches zu erfassendes Signal zu erhalten.

3. Vorrichtung nach Anspruch 2, **dadurch gekennzeichnet, dass** das Modul (44) ein Modul zur Lokalisierungsschätzung ist:

• anhand von Amplitudenwerten $A_1$, $A_2$, die in den empfangenen Signalen gemessen werden, die an jeder Empfangsvorrichtung empfangen werden, und/oder

• anhand des gemessenen Verhältnisses ($A_1/A_2$) dieser Amplituden nach einer Ausbreitung, und/oder

• anhand der Ausbreitungszeiten $\tau_1$, $\tau_2$, die in den empfangenen Signalen an jeder Empfangsvorrichtung gemessen werden, und/oder anhand der gemessenen Differenz ($\tau_1 - \tau_2$) dieser Ausbreitungszeiten, und/oder

• anhand der Ausbreitungsphasen $\varphi_1$, $\varphi_2$, die in den empfangenen Signalen an jeder Empfangsvorrichtung gemessen werden, und/oder anhand der gemessenen Differenz ($\varphi_1 - \varphi_2$) dieser Ausbreitungsphasen.

4. Vorrichtung nach einem der vorhergehenden Ansprüche, **dadurch gekennzeichnet, dass** mindestens eine der Empfangsvorrichtungen (2) ein generischer Breitbandempfänger ist.

5. Vorrichtung nach einem der vorhergehenden Ansprüche, **dadurch gekennzeichnet, dass** die Empfangsvorrichtung (2) aus einer Einheit dedizierter Empfänger besteht, die spezifisch angepasste Verstärkungsmodule von Filterungen und Schwellenwertbildungen aufweisen, deren Eingangssignale von einem Schalter (7) stammen, der mit der linearen Antenne (1) verbunden ist.

6. Vorrichtung nach einem der vorhergehenden Ansprüche, **dadurch gekennzeichnet, dass** die Empfangsvorrichtung (2) Module selektiver Frequenzfilterung umfasst, die angepasst sind, um das empfangene Signal zu beschneiden.

7. Vorrichtung nach einem der vorhergehenden Ansprüche, **dadurch gekennzeichnet, dass** sie ein Mittel umfasst, das angepasst ist, um die Signale am Ausgang von zwei verschiedenen linearen Antennen zu koppeln und um das resultierende Signal in eine einzige Empfangsvorrichtung einzuspeisen.

8.  Vorrichtung nach einem der vorhergehenden Ansprüche, **dadurch gekennzeichnet, dass** sie ein Boxensystem umfasst, das angepasst ist, um die Eingrenzung des Signals lokal zu optimieren, wie z. B. umgekehrt montierte Stromkabelgitter, Gitter mit unterschiedlichen Maschen und Geometrien.

9.  Verfahren zum eingegrenzten Erfassen und Lokalisieren von einer oder mehreren Funkvorrichtungen (4), die in einer geschlossenen oder halboffenen verbotenen Zone vorhanden sind, **dadurch gekennzeichnet, dass** es mindestens die folgenden Schritte umfasst:

    • Verwenden einer linearen Antenne (1), die mehrere Öffnungen Oi umfasst, die angepasst sind, um den Durchgang von Signalen, die von der oder den Funkvorrichtungen ausgesendet werden über die lineare Antenne zu einer Empfangsvorrichtung (2), die mit der linearen Antenne (1) verbunden ist, zu ermöglichen,
    • Behandeln der empfangenen Signale, um die Anwesenheit von nicht autorisierten Vorrichtungen in der Zone zu erfassen und um die Erfassungen von autorisierten Vorrichtungen außerhalb der Zone abzulehnen, wobei die Behandlung von Signalen einen ersten Schwellenwert $Seuil_{j,f}$ verwendet, derart, dass:

    $$10.\log_{10}(P_{0,j,f})-C(r_0)-P'.(l-l_0)-10.\log_{10}(r/r_0)-10.\log_{10}(N_{j,f}) \geq 10.\log_{10}(Seuil_{j,f})+\eta,$$

    wobei

    . r, l, die radialen und linearen Koordinaten eines Punkts M sind,
    . $l_0$ einen linearen Referenzabstand bezeichnet,
    . $r_0$ einen linearen Referenzabstand zum linearen Element bezeichnet,
    . P' die Rate linearer Verluste entlang der Antenne, die ab dem Abstand $l_0$ abgestrahlt werden, bezeichnet,
    . $-C(r_0)$ die Verluste durch Kopplung in dem Band $B_{j,f}$ in dem radialen Referenzabstand bezeichnet,
    . $N_{j,f}$ das Empfangsrauschen in dem Band $B_{j,f}$ ist,
    $P_{0,j,f}$ die abgestrahlte Leistung am Punkt M(r,l) in der Verbotszone in dem Band $B_{j,f}$ bezeichnet,
    . $Seuil_{j,f}$ den Empfindlichkeitsschwellenwert der Empfangsvorrichtung in dem Band $B_{j,f}$ darstellt, der reguliert ist, um die Eingrenzung der Erfassung zu erlangen,
    . $\eta$ eine gewisse Vorsichtsspanne darstellt, um die zusätzlichen Abschwächungen des Signals bei seiner Ausbreitung von dem verbotenen Gerät (4) zu der Antenne (1) zu berücksichtigen, und

    einen zweiten Ablehnungsschwellenwert $Seuil'_{j,f}$, derart, dass

    $$10.\log_{10}(P_{s,j,f}) - 20.\log_{10}(R) - 10.\log_{10}(N_{j,f}) \leq 10.\log_{10}(Seuil'_{j,f}) - \eta',$$

    wobei

    . R der Abstand von dem Punkt M (außerhalb der Verbotszone) zur Phasenmitte der linearen Antenne ist,
    . $P_{s,j,f}$ die abgestrahlte Leistung am Punkt M(r,l) durch die zulässigen Geräte außerhalb der Verbotszone in dem Band $B_{j,f}$ bezeichnet,
    . $Seuil'_{j,f}$ einen Schwellenwert einer Nichterfassung der Empfangsvorrichtung in dem Band $B_{j,f}$ reguliert gemäß der Verstärkung des linearen Elements darstellt, um die Eingrenzung der Erfassung zu erlangen,
    . $\eta'$ eine Vorsichtsspanne darstellt, die abgestrahlte Leistungsüberschüsse bei der Aussendung berücksichtigt.

10. Verfahren nach Anspruch 9, **dadurch gekennzeichnet, dass** die Pegel des Erfassungsschwellenwerts $Seuil_{j,f}$ und Ablehnungsschwellenwerts $Seuil'_{j,f}$ unter Berücksichtigung von einem oder mehreren der folgenden Parameter bestimmt werden:

    - der Messungen der Pegel der Markierungs-, Kontroll- und Verkehrssignale, die von Aussendern (9, 10, 11, 12) stammen, die in den externen Netzwerken vorhanden und in der Lage sind, mit den unerlaubten Vorrichtungen in Kommunikation zu treten,
    - der Rate P' linearer Verluste in der linearen Antenne,
    - der Verluste durch Kopplungen $C(r_0)$ der linearen Antenne,
    - der Spannen $\eta$, die dazu bestimmt sind, die zusätzlichen Abschwächungen unterschiedlicher Art, die das Interferenzsignal J bei seiner Ausbreitung nach der linearen Antenne (1) bis zu der Vorrichtung (4), die interferiert werden soll, auszugleichen,
- Spannen η', die dazu bestimmt sind, die bei der Aussendung abgestrahlten Leistungsüberschüsse auszugleichen.

**Claims**

1.  A device for detecting and localizing in a confined manner one or more radio devices (4) which might be present in an enclosed or semi-open area of prohibition, **characterized in that** it comprises at least the following elements: at least one linear aerial (1) comprising several orifices Oi designed to allow the capture of the signals emitted by the prohibited radio device or devices then their transmission via the linear aerial to a receiving device (2) connected to the linear aerial (1) via a connector (3), the receiving device being adapted to process the signals sensed by the linear aerial (1) in order to detect the presence of prohibited devices in said area and to reject the detections of the authorized devices outside of said area, and **in that** the receiving device (2) comprises at least two detection thresholds $Seuil_{j,f}$ and $Seuil'_{j,f}$, the value of the threshold $Seuil_{j,f}$ is adapted so that the value of the power received $P(r,l)_{j,f}$ at the detection device is such that the ratio $P(r,l)_{j,f}/N_{j,f}$ is higher than the detection threshold $Seuil_{j,f}$ for the carriers employed by the transmitters of the illicit devices considered at the points M(r,l) inside of the area of prohibition, with:

$$10.\log_{10}(P_{0,j,f})-C(r_0)-P'.(l-l_0)-10.\log_{10}(r/r_0)-10.\log_{10}(N_{j,f}) \geq 10.\log_{10}(Seuil_{j,f})+\eta$$

where

. r, l, are the radial and linear coordinates of a point M,
. $l_0$ denotes a reference linear distance,
. $r_0$ denotes a reference radial distance to the linear element,
. P' denotes the rate of the linear losses along the radiating aerial starting from the distance $l_0$,
. $-C(r_0)$ denotes the coupling losses in the band $B_{j,f}$ at the reference radial distance,
. $N_{j,f}$ denotes the receiver noise in the band $B_{j,f}$,
. $P_{0,j,f}$ denotes the power radiated at the point M(r,l) in the band $B_{j,f}$,
. $Seuil_{j,f}$ represents the sensitivity threshold of the receiving device in the band $B_{j,f}$, adjusted in order to obtain the confinement of the detection,
. η represents a safety margin taking into account the additional attenuations of the signal when it propagates from the prohibited terminal (4) to the aerial (1), and

the value of the threshold $Seuil'_{j,f}$ is such that:

$$10.\log_{10}(P_{S,j,f}) - 20.\log_{10}(R) - 10.\log_{10}(N_{j,f}) \leq 10.\log_{10}(Seuil'_{j,f}) - \eta'$$

where

. R is the distance from the point M, outside of the area of prohibition, to the phase center of the linear aerial,
. $P_{S,j,f}$ denotes the power radiated at the point M(R) by the permissible terminals outside of the area of prohibition, in the band $B_{j,f}$,
. $Seuil'_{j,f}$ represents a non-detection threshold of the receiving device in the band $B_{j,f}$ adjusted according to the gain of the linear element in order to obtain the confinement of the detection to the area of prohibition,
. η' represents a safety margin taking into account excesses of power at transmission.

2.  The device as claimed in claim 1, **characterized in that** it comprises a first receiving device (42a) disposed at a first end (41a) of the linear aerial (41) and a second receiving device (42b) disposed at a second end (41b) of the linear aerial, the first and the second receiving device being synchronized by means of a module (44) in order to receive the same signal to be detected at the two ends of the linear aerial (41).

3.  The device as claimed in claim 2, **characterized in that** the module (44) comprises a module for estimating localization:

• based on the values of amplitudes $A_1$, $A_2$ measured on the signals received on each receiving device, and/or
• based on the measured ratio ($A_1/A_2$) of these amplitudes after propagation, and/or
• based on the propagation times $\tau_1$, $\tau_2$ measured on the signals received on each receiving device, and/or based on the measured difference ($\tau_1$-$\tau_2$) of these propagation times, and/or
• based on the measured propagation phases $\varphi_1$, $\varphi_2$ of the signals received on each receiving device, and/or based on the measured difference ($\varphi_1$-$\varphi_2$) of these propagation phases.

4. The device as claimed in one of the preceding claims, **characterized in that** at least one of the receiving devices (2) is a generic wideband receiver.

5. The device as claimed in one of the preceding claims, **characterized in that** the receiving device (2) is composed of an assembly of dedicated receivers, having specifically adapted filtering and thresholding amplification modules, whose input signals come from a switch (7) connected to the linear aerial (1).

6. The device as claimed in one of the preceding claims, **characterized in that** the receiving device (2) comprises filtering modules selective in frequency and adapted to excise the received signal.

7. The device as claimed in one of the preceding claims, **characterized in that** it comprises a means designed to couple the signals at the output of two different linear aerials and to inject the resulting signal into a single receiving device.

8. The device as claimed in one of the preceding claims, **characterized in that** it comprises a system of baffles designed to locally optimize the confinement of the signal, such as grids for the passage of electrical cables with reversed mounting, or nettings with various meshes and geometries.

9. A method for detecting and localizing in a confined manner one or more radio devices (4) present in an enclosed or semi-open prohibited area, **characterized in that** it comprises at least the following steps:

• use a linear aerial (1) comprising several orifices Oi designed to allow the passage of the signals emitted by the radio device or devices via the linear aerial to a receiving device (2) connected to the linear aerial (1),
• process the received signals in order to detect the presence of unauthorized devices within said area and to reject the detections of the authorized devices outside of said area, the processing of the signals uses a first threshold $Seuil_{j,f}$ such that:

$$10.\log_{10}(P_{0,j,f})-C(r_0)-P'.(l-l_0)-10.\log_{10}(r/r_0)-10.\log_{10}(N_{j,f}) \quad \geq \quad 10.\log_{10}(Seuil_{j,f})+\eta$$

where

. r, l, are the radial and linear coordinates of a point M,
. $l_0$ denotes a reference linear distance,
. $r_0$ denotes a reference radial distance to the linear element,
. P' denotes the rate of the linear losses along the radiating aerial starting from the distance $l_0$,
. $-C(r_0)$ denotes the coupling losses in the band $B_{j,f}$ at the reference radial distance,
. $N_{j,f}$ denotes the receiver noise in the band $B_{j,f}$,
. $P_{0,j,f}$ denotes the power radiated at the point M(r,l) within the area of prohibition, in the band $B_{j,f}$,
. $Seuil_{j,f}$ represents the sensitivity threshold of the receiving device in the band $B_{j,f}$, adjusted in order to obtain the confinement of the detection,
. $\eta$ represents a certain safety margin for taking into account additional attenuations of the signal when it propagates from the prohibited terminal 4 to the aerial (1), and

a second rejection threshold $Seuil'_{j,f}$ such that

$$10.\log_{10}(P_{S,j,f}) - 20.\log_{10}(R) - 10.\log_{10}(N_{j,f}) \leq 10.\log_{10}(Seuil'_{j,f}) - \eta'$$

where

. R is the distance from the point M (outside of the area of prohibition) to the phase center of the linear aerial,

. $P_{S,j,f}$ denotes the power radiated at the point M(r,l) by the permissible terminals outside of the area of prohibition, in the band $B_{j,f}$,

. Seuil'$_{j,f}$ represents a non-detection threshold of the receiving device in the band $B_{j,f}$ adjusted according to the gain of the linear element in order to obtain the confinement of the detection,

. $\eta$' represents a safety margin taking into account excesses of radiated power at transmission.

10. The method as claimed in claim 9 **characterized in that** the threshold levels for detection Seuil$_{j,f}$ and rejection Seuil'$_{j,f}$ are determined by taking into account one or more of the following parameters:

- the measurements of the levels of the beacon, control and traffic signals coming from transmitters (9, 10, 11, 12) present in the external networks and capable of entering into communication with the illicit devices,

- the rate P' of linear losses within the linear aerial,
- the coupling losses $C(r_0)$ of the linear aerial,

- margins $\eta$ intended to compensate for the additional attenuations of various natures which may affect the scrambling signal J when it propagates from the linear aerial (1) to the device (4) to be scrambled,
- margins $\eta$' intended to compensate for the excesses of radiated power at transmission.

FIG.1

EP 3 080 639 B1

Non radiatif : radiatif : Non radiatif : radiatif :

21

**FIG.2**

$A_1, \tau_1, \varphi_1$

$Sig_1$

42a

43a

41a

41

41b

43b

42b

44

$Sig_2$

$A_2, \tau_2, \varphi_2$

**FIG.4**

FIG.3b

FIG.3a

EP 3 080 639 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008042864 A
- DE 102011107164
- DE 102007037723